# EUROPEAN PATENT APPLICATION

(11) **EP 0 926 530 A1**
(43) Date of publication of application: **30.06.1999**
(21) Application number: 98111603.1
(22) Date of filing: 24.06.1998
(51) Int. Cl.: G02C 5/22

(54) **Lens-to-temple joint structure for a pair of eyeglasses.**

(30) Priority: 26.12.1997 JP 35982097
(71) Applicant: Yugen Kaisha Moná JAPAN, Corporation, Fukui-shi, Fukui-ken, 918-8016 (JP)
(72) Inventor: Kobayashi, Mitsuo, Fukui-shi, Fukui-ken 918-8016 (JP)
(74) Representative: VOSSIUS & PARTNER

(57) **Abstract**

Disclosed is an improved part-to-part joint structure, and particularly to a lens-to-temple joint structure for fixing a temple (4) rotatably to each lens (1) in a pair of glasses. It comprises a ring-like piece (3a) having a joint extension (2a) integrally formed thereto for fixing to the lens, an annular bush (3c) and a hammer head-like projection (3b) integrally connected to the temple (4). The annular bush (3c) is so sized that it may be press-fitted in the ring-like piece (3a), and that the hammer head-like projection (3b) may be press-fitted in the annular bush. The hammer head-like projection (3b) may be rotatably fitted in the annular bush (3c), and hence in the ring-like piece (3a), thereby fixing the temple (4) rotatably to the lens (1).

## Description

The present invention relates to a lens-to-temple joint structure for fixing a temple rotatably to each lens in a pair of eyeglasses.

A conventional lens-to-temple joint structure as disclosed in Japanese Utility Model 60-70825 uses a lens-fastening piece having a hinge-half soldered thereto and a temple-fastening piece having a counter hinge-half soldered thereto, and the temple is rotatably fixed to the lens by coupling the hinge-half of the lens-fastening piece to the counter hinge-half of the temple-fastening piece.

The defects of such conventional lens-to-temple joint structure are: the temples are liable to lose the pleasing tightness in folding the temples relative to the front of the frame in a pair of eyeglasses, thus permitting the temples to rotate loosely relative to the front of the frame; and the soldering space which is occupied by the hinge-half of the lens-fastening or temple-fastening piece is too large to permit these pieces to be soldered at an increased efficiency, and accordingly the manufacturing efficiency is lowered.

In case of a pair of rimless glasses using fine temples the hinge-halves must be reduced in size accordingly, and the so small-sized hinge-halves are difficult to be produced, and are fragile because of their thinness.

One object of the present invention is to provide a part-to-part joint structure, particularly to a lens-to-temple joint structure, which is simple and stout, requiring neither spot-welding nor soldering.

To attain this object a part-to-part joint structure for fixing one eyeglasses part rotatably to another eyeglasses part in a pair of eyeglasses according to the present invention comprises a ring-like piece having a joint extension integrally formed thereto for fixing to said one eyeglasses part and a hammer head-like projection integrally connected to said another eyeglasses part to be press-fitted in the ring-like piece, thereby fixing said another eyeglasses part rotatably to said one eyeglasses part. The word "eyeglasses part" used in the specification and claims includes a temple, a fastening piece, a bar, a nose pad, a box-like adapter and any other part used in a pair of eyeglasses.

A lens-to-temple joint structure for fixing a temple rotatably to each lens in a pair of eyeglasses according to the present invention comprises a ring-like piece having a joint extension integrally formed thereto for fixing to the lens and a hammer head-like projection integrally connected to the temple to be press-fitted in the ring-like piece, thereby fixing the temple rotatably to the lens.

With this arrangement the temple can be rotatably fixed to the front or lens simply by press-fitting the hammer head-like projection into the ring-like piece.

The lens-to-temple joint structure may further comprise an annular bush of a flexible material such as a synthetic resin, the annular bush being so sized that it may be press-fitted in the ring-like piece, and that the hammer head-like projection may be press-fitted in the annular bush.

The intervening annular bush between the ring-like piece and the hammer head-like projection has the effect of increasing the friction against the rotation of the temple relative to the front, thereby preventing the undesired rotation of the temple relative to the front, and at the same time, the slipping-off of the temple from the ring-like piece.

The ring-like piece and/or the annular bush may have a slot made therein for permitting the temple to rotate in a limited range.

With this arrangement the temple can stop its rotation at a predetermined position, and the pleasing tightness with which the temple can be rotated relative to the front cannot be lost because of additional significant friction caused by the temple moving in the slot.

According to another aspect of the present invention a lens-to-temple joint structure comprises a ring-like piece having a joint extension integrally formed thereto for fixing to the lens and a hammer head-like projection integrally connected to the temple to be press-fitted in the ring-like piece, the ring-like piece having an L-shaped slot opening vertically at its top and/or bottom side and opening horizontally on its circumference, thereby permitting the hammer head-like projection to rotate, but preventing it from slipping off from the ring-like piece.

With this arrangement the temple can be easily fixed to the lens simply by press-fitting, requiring no screws.

Other objects and advantages of the present invention will be understood from the following description of preferred embodiments of the present invention, which are shown in accompanying drawings.
Fig.1 is a side view of a pair of eyeglasses using lens-to-temple joint structures according to a first embodiment of the present invention;
Fig.2 is a plane view of the lens-to-temple joint structure used in Fig.1;
Fig.3 is a perspective view of the lens-to-temple joint structure according to the first embodiment;
Fig.4 is another perspective view of the lens-to-temple joint structure according to the first embodiment;
Fig.5 is an exploded view of the lens-to-temple joint structure according to the first embodiment;
Fig.6 is an exploded perspective view of the ring-like piece and the temple end;
Fig.7 is an exploded perspective view of the ring-like piece and the temple-and-annular bush assembly;
Fig.8 is a perspective view of the lens-to-temple joint structure with the temple folded inward;
Fig.9 is a perspective view of the lens-to-temple joint structure with the temple extended straight;
Fig.10 is a perspective view of a lens-to-temple joint structure according to a second embodiment of the present invention;
Fig.11 is an exploded perspective view of the lens-to-temple joint structure according to the second embodiment;
Fig.12 shows how different pieces are assembled to a lens-to-temple joint structure according to the second embodiment; and
Fig.13 is a perspective view of the lens-to-temple joint structure according to the second embodiment.

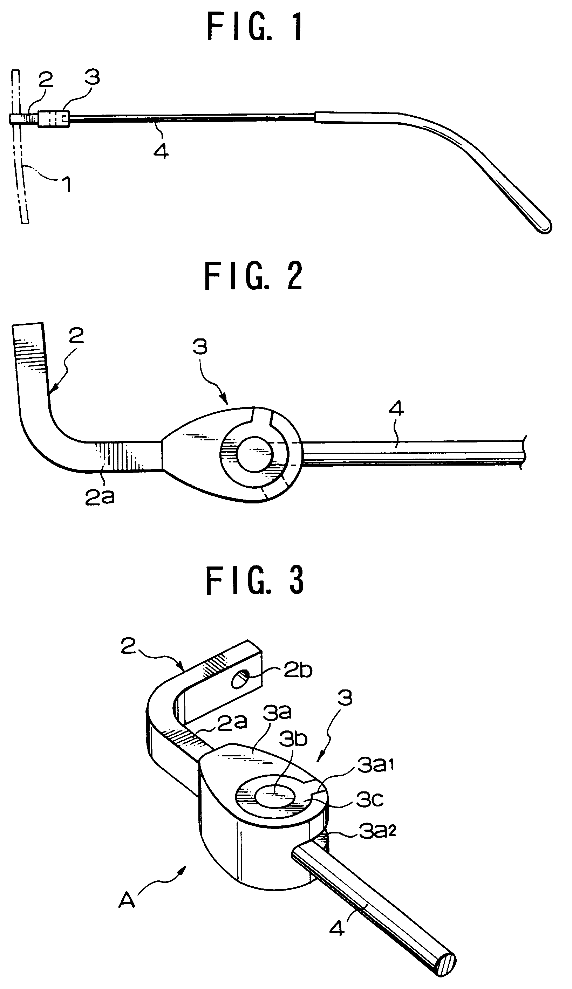

Figs.1 to 9 show a lens-to-temple joint structure A for fixing a temple rotatably to each lens 1 in a pair of glasses according to a first embodiment of the present invention. Referring to Fig.1, a temple 4 is hinged to an associated lens 1.

The lens 1 is made of glass or plastic material, and it has a temple-fastening aperture (not shown) made at a predetermined position. The aperture is square, so that the temple 4 when fixed to the lens 1 with a hook-like joint piece 2 may be prevented from rotating about the temple-fastening aperture. The temple 4 is made of nickel alloy or titanium.
The lens-to-temple joint structure A comprises a ring-like piece 3a having a hook-like joint extension 2a integrally formed thereto, an annular bush 3c of a flexible material such as a metal or hard synthetic resin and a hammer head-like projection 3b integrally connected to the temple 4. The annular bush 3c is so sized that it may be press-fitted in the ring-like piece 3a, and that the hammer head-like projection 3b may be press-fitted in the annular bush 3c.

As seen from Fig.3, the hook-like joint extension 2a has a fastening aperture 2b made at its end. The ring-like piece 3a can be fixed to the lens 1 by inserting a screw (not shown) in the fastening aperture 2b of the hook-like joint extension 2a and the square fastening aperture of the lens 1, and by driving the screw to fasten tightly the hook-like joint extension 2a to the lens 1.

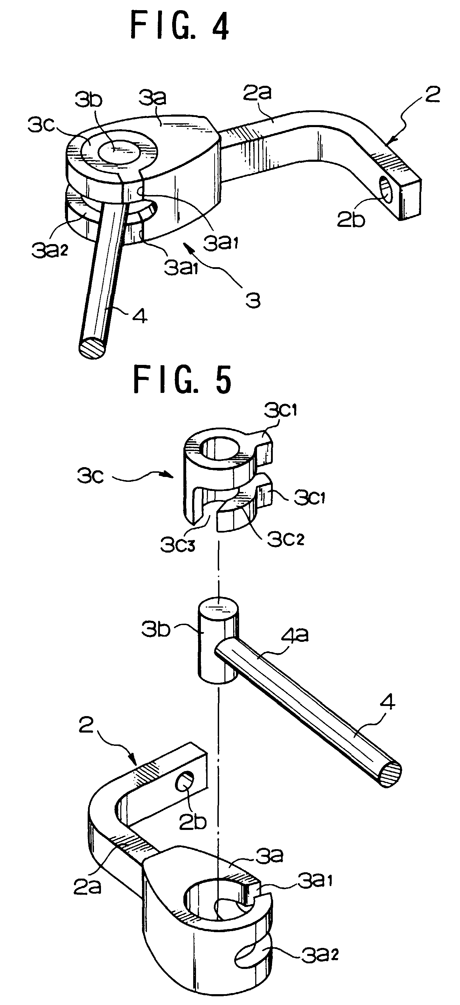

The ring-like piece 3a is made of a metal or a synthetic resin, and has a vertical fixing slot 3a₁ made in its circumference and a horizontal rotation-permitting slot 3a₂ in its circumference. As best seen from Fig.4, the vertical fixing slot 3a₁ is made vertically in the circumference of the ring-like piece 3a, running from its top to bottom surface to permit the temple 4 to be guided to the horizontal rotation-permitting slot 3a₂.

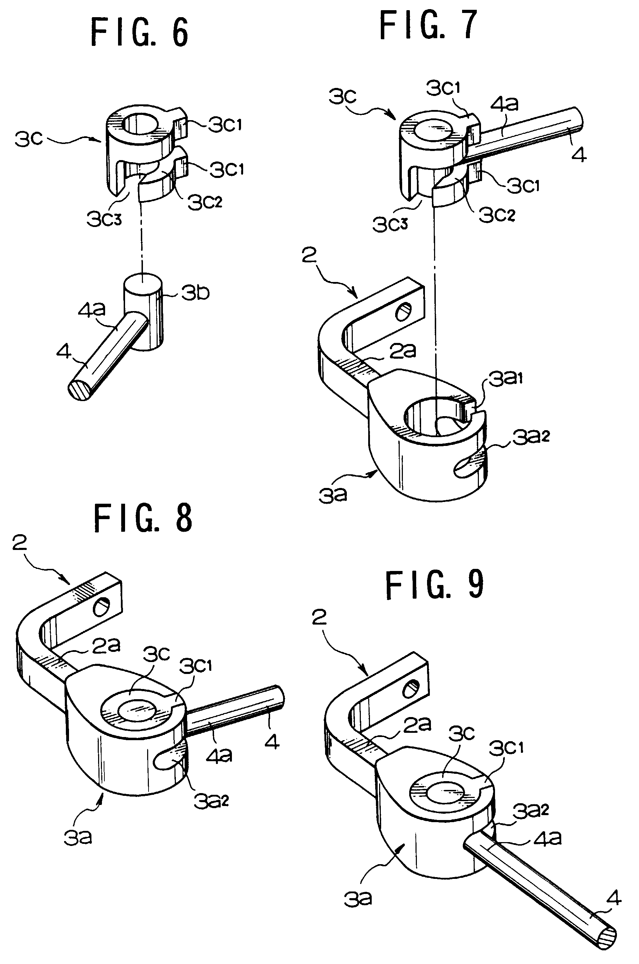

The horizontal rotation-permitting slot 3a₂ is so made in the circumference of the ring-like piece 3a to permit the temple 4 to turn at least 90 degrees. More specifically the horizontal rotation-permitting slot 3a₂ covers the range long enough to permit the temple 4 to be folded on the front of a pair of eyeglasses (see Fig.8) and to be extended straight in alignment with the hook-like joint extension 2a of the ring-like piece 3a (see Fig.9).

As seen from Fig.5, the annular bush 3c has upper and lower detents 3c₁, a horizontal slot 3c₂ and a vertical slot 3c₃ all formed on its circumference. These upper and lower detents 3c₁ are so formed that they may be press-fitted in the vertical fixing slot 3a₁ of the ring-like piece 3a, thereby preventing the annular bush 3c from turning in the ring-like piece 3a. Also, the horizontal slot 3c₂ and vertical slot 3c₃ are so formed that: when the annular bush 3c is press-fitted in the ring-like piece 3a, the horizontal slot 3c₂ may be put in alignment with the horizontal rotation-permitting slot 3a₂ of the ring-like piece 3a; and the vertical slot 3c₃ may be closed by the ring-like piece 3a, although it is allowed open downward.

As seen from Fig. 6, the vertical slot 3c₃ permits the hammer head-like projection 3b of the temple 4 to be fitted snugly in the annular bush 3c, thereby permitting the temple 4 to turn in the horizontal slot 3c₂ of the annular bush 3c. The annular bush 3c having the hammer head-like projection 3b fitted therein (see Fig.6) is fitted in the ring-like piece 3a (see Fig.7) so that the temple 4 may be rotatably fixed to the ring-like piece 3a.

The pleasing tightness in rotating the temple can be provided by determining the inner diameter of the annular bush 3 and the outer diameter of the hammer head-like projection 3b relative to each other appropriately for the purpose.

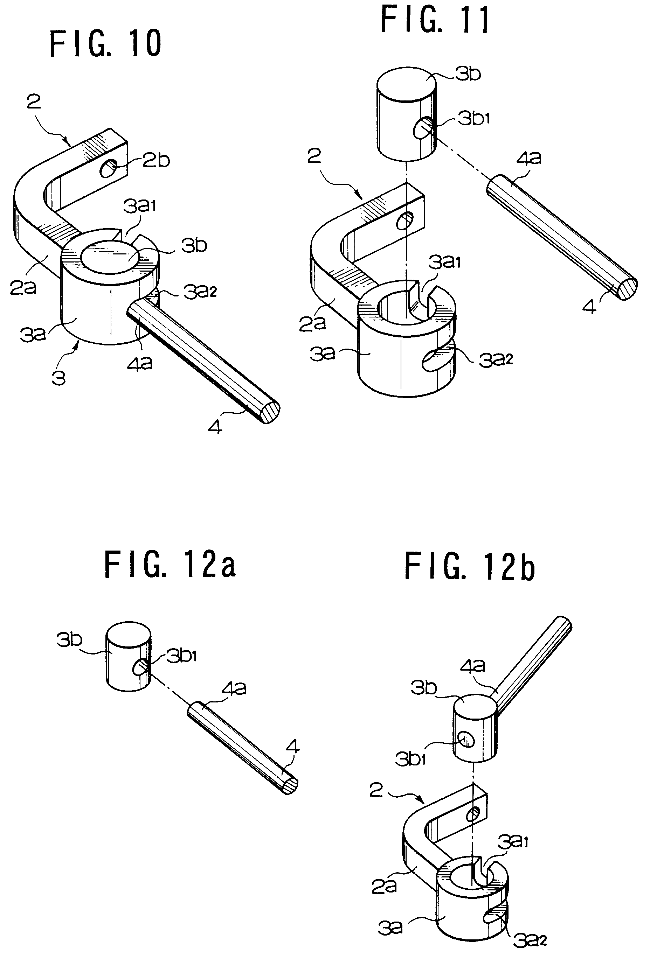

Figs.10 to 13 show a lens-to-temple joint structure B according to a second embodiment of the present invention. In these drawings same parts as in the first embodiment are indicated by same reference numerals as used in Figs.1 to 9, but parts which are not used in the first embodiment are indicated by new reference numerals.

Referring to Fig.10, the lens-to-temple joint structure B comprises a ring-like piece 3 having a hook-like joint extension 2a integrally formed thereto, and a hammer head-like projection 3b integrally connected to the temple 4. The cylindrical body 3a of the ring-like piece 3 is made of a metal or synthetic resin, and it has a vertical fixing slot 3a₁ and a horizontal rotation-permitting slot 3a₂ made therein.

As seen from Fig.11, the vertical fixing slot 3a₁ extends from the top of the cylindrical body 3a down to the horizontal rotation-permitting slot 3a₂, thereby permitting the temple 4 to be fitted detachably in the cylindrical body 3a. The horizontal rotation-permitting slot 3a₂ expands an angle large enough to permit the temple 4 to turn at least 90 degrees inward, as is the case with the first embodiment.

The hammer head-like projection 3b is made of a metal or synthetic resin, and is integrally connected to the temple end 4a. The pleasing resistance to the turning of the temple can be provided by determining the inner diameter of the annular bush 3, the outer diameter of the hammer head-like projection 3b and the size of the horizontal rotation-permitting slot 3a₂ relative to each other appropriately for the purpose.

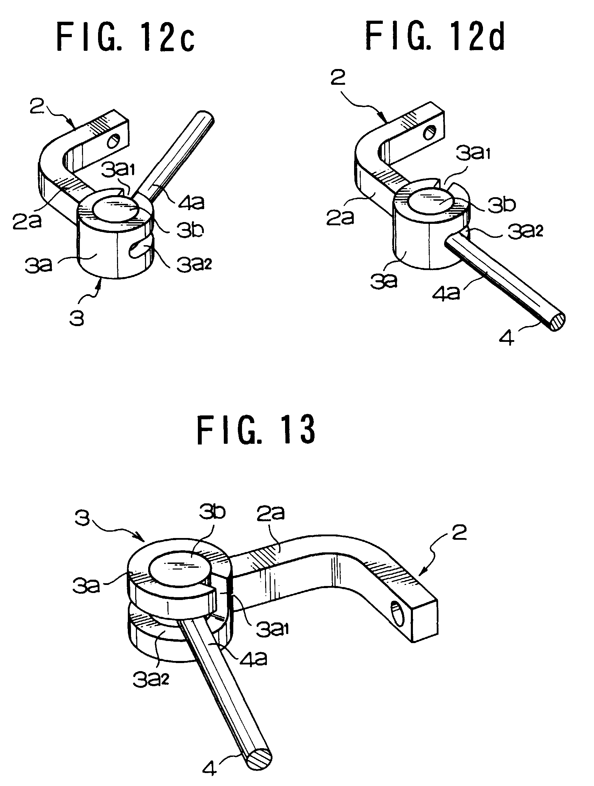

Referring to Fig.12, the temple end 4a is inserted into the hammer head-like projection 3b (Fig.12-a), and the temple 4 is so oriented relative to the cylindrical body 3a that the temple 4 may be put in alignment with the vertical fixing slot 3a, of the cylindrical body 3a (Fig.12-b). Then, the hammer head-like projection 3b is fitted in the cylindrical body 3a (Fig.12-c). Then, the temple 4 can be rotated 90 degrees in the horizontal rotation-permitting slot 3a₂ (Fig.12-d).

As may be understood from the above, a lens-to-temple joint structure according to the present invention requires neither soldering nor spot welding, which otherwise, would be required for instance, in using a hinge. Eyeglasses parts, therefore, can be jointed simply and reliably. Even if eyeglasses parts should be broken in assembling, such broken parts can be easily replaced by new ones. The lens-to-temple joint structure is so simple that mass production may be facilitated, and accordingly the manufacturing cost is lowered.

A part-to-part joint structure according to the present invention is described above as being applied to the lens-to-temple joint in a pair of rimless glasses, but it can be applied to the lens-to-temple joint in a pair of celluloid rimmed or metal/combination-rimmed glasses. Also, it can be used in parts to be articulated in a pair of glasses. All modifications which are obvious to those skilled in the art will fall within the scope of the present invention as defined in claims.

## Claims

1. A lens-to-temple joint structure for fixing a temple (4) rotatably to each lens (1) in a pair of glasses characterized in that it comprises a ring-like piece (3a) having a joint extension (2a) integrally formed thereto for fixing to the lens and a hammer head-like projection (3b) integrally connected to the temple (4) to be press-fitted in the ring-like piece (3a), thereby fixing the temple rotatably to the lens.

2. A lens-to-temple joint structure according to claim 1 wherein it further comprises an annular bush (3c) of a flexible material such as a synthetic resin, the annular bush (3c) being so sized that it may be press-fitted in the ring-like piece (3a), and that the hammer head-like projection (3b) may be press-fitted in the annular bush (3c).

3. A lens-to-temple joint structure according to claim 2 wherein the ring-like piece (3a) and/or the annular bush (3c) have a slot (3a₁) made therein for permitting the temple (4) to rotate in a limited range.

4. A lens-to-temple joint structure for fixing a temple (4) rotatably to each lens (1) in a pair of glasses characterized in that it comprises a ring-like piece (3a) having a joint extension (2a) integrally formed thereto for fixing to the lens and a hammer head-like projection (3b) integrally connected to the temple to be press-fitted in the ring-like piece (3a), and that the ring-like piece has an L-shaped slot (3a₁ to 3a₂) opening vertically at its top and/or bottom side and opening horizontally on its circumference, thereby permitting the hammer head-like projection (3b) to rotate, but preventing it from slipping off from the ring-like piece (3a).

5. A part-to-part joint structure for fixing one eyeglasses part rotatably to another eyeglasses part in a pair of glasses characterized in that it comprises a ring-like piece (3a) having a joint extension (2a) integrally formed thereto for fixing to said one eyeglasses part and a hammer head-like projection (3b) integrally connected to said another eyeglasses part to be press-fitted in the ring-like piece (3a), thereby fixing said another eyeglasses part rotatably to said one eyeglasses part.

6. A part-to-part joint structure according to claim 5 wherein it further comprises an annular bush (3c) of a flexible material such as a synthetic resin, the annular bush (3c) being so sized that it may be press-fitted in the ring-like piece (3a), and that the hammer head-like projection (3) may be press-fitted in the annular bush (3c).

7. A part-to-part joint structure according to claim 6 wherein the ring-like piece (3a) and/or the annular bush (3c) have a slot (3a₂, 3c₂) made therein for permitting said another eyeglasses part to rotate in a limited range.

8. A part-to-part joint structure for fixing one eyeglasses part rotatably to another eyeglasses part in a pair of glasses characterized in that it comprises a ring-like piece (3a) having a joint extension (2a) integrally formed thereto for fixing to one eyeglasses part and a hammer head-like projection (3b) integrally connected to said another eyeglasses part to be press-fitted in the ring-like piece (3a), and that the ring-like piece (3a) has an L-shaped slot (3a₁ to 3a₂) opening vertically at its top and/or bottom side and opening horizontally on its circumference, thereby permitting the hammer head-like projection (3b) to rotate, but preventing it from slipping off from the ring-like piece (3a).
